# EUROPÄISCHE PATENTSCHRIFT

(11) **EP 0 748 718 B1**
(45) Veröffentlichungstag und Bekanntmachung des Hinweises auf die Patenterteilung: **09.06.1999**
(21) Anmeldenummer: 96106590.1
(22) Anmeldetag: 26.04.1996
(51) Int. Cl.: B60P 3/32

(54) **Wohnwagen**
Caravan
Caravane

(30) Priorität: 17.06.1995 DE 29509844 U
(43) Veröffentlichungstag der Anmeldung: 18.12.1996
(73) Patentinhaber: Knaus GmbH Jandelsbrunn, 94118 Jandelsbrunn (DE)
(72) Erfinder: Cürten, Franz J. Dipl.-Ing., 94065 Waldkirchen (DE); Nusser, Alois Dipl.-Ing., 94118 Jandelsbrunn (DE)
(74) Vertreter: Matschkur, Lindner Blaumeier Patent- und Rechtsanwälte

(56) Entgegenhaltungen:
- DE-A- 3 303 543
- FR-A- 1 086 786
- US-A- 3 458 073
- US-A- 4 852 779

## Beschreibung

Im Zuge der zunehmenden sportlichen Aktivitäten von Campern und Wohnwagenurlaubern besteht ein dringendes Bedürfnis nach einer einfachen und kostengünstigen Transportmöglichkeit für mitzunehmende Zweiräder, für die bisher nur relativ aufwendige und darüber hinaus auch die ganze Heckseite blokkierende Fahrrad- oder Motorradträger zur Verfügung standen, wenn man nicht den noch umständlicheren Weg der Verstauung der Fahrräder auf Dachgepäckträgern wählen wollte.

Der Erfindung liegt daher die Aufgabe zugrunde, einen Wohnwagen so auszugestalten, daß er in einfacher Weise die Mitnahme von Zweiräden gestattet, ohne daß aufwendige Trägeranbauten erforderlich sind.

Zur Lösung dieser Aufgabe ist ein Wohnwagen erfindungsgemäß gekennzeichnet durch eine überbreite Hecktür und wenigstens eine am Boden in Fahrzeuglängsrichtung befestigbare, bei Nichtgebrauch unter dem Boden in einer Einschubhalterung verstaubare, Verankerungsschiene, sowie durch seitliche Befestigungsösen im Boden für Spannseile zum Transport von Zweirädern, insbesonder eines Motorrades.

Durch die erfindungsgemäße Ausgestaltung, die speziell für den Motorradtransport bevorzugt auch eine lösbar anlenkbare Auffahrschiene mit umfassen soll, läßt sich ein Motorrad sehr einfach im Innern des Wohnwagens verstauen, in dem ja beim Transport sich sowieso keine Personen aufhalten können, so daß der Gang ohne weiteres durch ein Motorrad, oder auch durch mehrere Fahrräder, blockiert werden kann. Nach der Ankunft kann das Motorrad oder die Fahrräder sehr einfach herausgefahren und die Verankerungsschiene zusammen mit der Auffahrschiene platzsparend unter dem Boden wieder verstaut werden. Der Transport des Motorrads im Innern des Fahrzeugs hat darüber hinaus auch den Vorteil, daß das Motorrad im wesentlichen über der Fahrzeugachse transportiert werden kann und somit keine einseitige schwere Heckbelastung - oder bei umgekehrter Anordnung Bugbelastung - stattfindet, wodurch unerwünschte und teilweise auch unzulässige Kräfte an der Anhängerkupplung vermieden werden.

Dabei hat es sich als zweckmäßig erwiesen, wenn die Sitze im Heckbereich lösbar und mit herausnehmbaren Container-Sitzkästen ausgebildet sind, die vorzugsweise unter das im Bug angeordnete Bett einschiebbar sein sollen.

Durch diese Herausnehmbarkeit, wobei die Sitzkästen in an sich bekannter Weise durch Bodenschienen mit entsprechend an den Sitzkästen angeordneten Gegenteilen am Boden verankerbar sind, läßt sich zusätzlicher Stauraum im Heckbereich schaffen, der beispielsweise dann erforderlich ist, wenn man drei oder gar vier Fahrräder mitnehmen will, wofür der normale Mittelgang nicht ausreicht.

Darüber hinaus haben die herausnehmbaren Container-Sitzkästen, die in weiterer Ausgestaltung der Erfindung mit Tragegriffen versehen sein können, den Vorteil, daß man sie im Außenbereich, beispielsweise in der Wohnung, beladen kann und dann beladen in den Wohnwagen zurückbringt. Dies vermeidet ein umständliches Arbeiten unter den häufig doch sehr beengten räumlichen Verhältnissen im Wohnwagen beim Verstauen der vielen mitzuführenden Gegenstände und Lebensmittel od.dgl.

Weitere Vorteile, Merkmale und Einzelheiten der Erfindung ergeben sich aus der nachfolgenden Beschreibung eines Ausführungsbeispiels sowie anhand der Zeichnung. Dabei zeigen:
- Fig. 1: eine perspektivische Ansicht eines erfindungsgemäßen Wohnwagens,
- Fig. 2: eine schematische Ansicht von rückwärts mit den unter dem Boden verstauten Verankerungs- und Auffahrschienen,
- Fig. 3: eine perspektivische schematische Rückansicht des Wohnwagens, in dem unter Verwendung der Verankerungs- und Auffahrschiene ein Motorrad verstaut ist, und
- Fig. 4: eine schematische perspektivische Innenansicht des Heckbereichs mit transportablen Container-Sitzkästen.

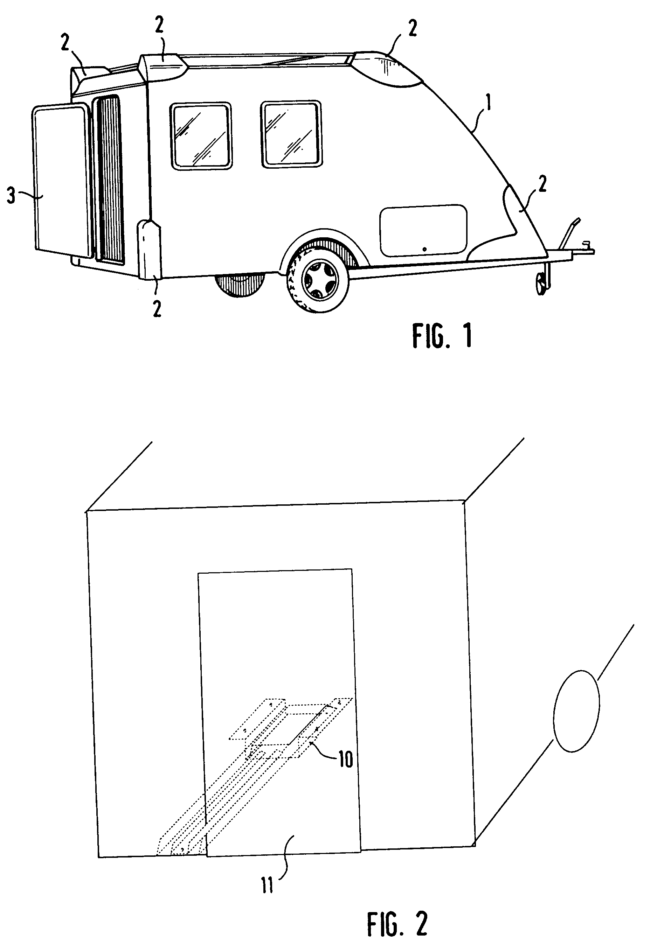

Der gezeigte; speziell für Sportzwecke ausgestaltete Wohnwagen nach Fig. 1 weist eine schräge Bugwand 1 auf, unter der das Bett angeordnet ist, und zeichnet sich darüber hinaus durch besonders betonte Eckenverstärkungen 2 aus, die sowohl von der Optik her als auch von der Funktion her den Wohnwagen charakteristisch prägen. Optisch fallen sie durch ihren deutlichen Überstand über die Außenwände und ihre farbliche Absetzung gegenüber der Farbgebung der Außenwände auf. Von der Funktion her können sie aus schlagfestem, ggf. auch zusätzlich stoßdämpfendem, Material gebildet sein, so daß sie gerade in den besonders gefährdeten Kantenbereichen, in denen häufiger ein Anstoßen zu befürchten ist, Beschädigungen entgegenwirken. Die im Dachbereich angeordneten Deckenversteifungen können dabei gleichzeitig auch als Träger für einen Dachgepäckträger mit dienen, auf dem sich beispielsweise Surfbretter od.dgl. verstauen lassen.

Eine wesentliche Besonderheit des erfindungsgemäßen Wohnwagens ist die überbreit gestaltete Hecktür 3, durch die es beispielsweise möglich ist, ein Motorrad von rückwärts in den Wohnwagen einzuschieben, so daß es im Wohnwagen transportiert werden kann. Dies ermöglicht nicht nur einen Transport ohne gesonderten aufwendigen Außenträger, sondern vor allem auch einen geschützten Transport ohne die Gefahr eines Verschmutzens und ohne die Gefahr einer Falschbelastung des Wohnwagens durch einseitige Anhängung des Motorrads. Das Motrrad befindet sich in der Transportstellung im wesentlichen über der Achse der Wohnwagenräder und belastet damit nicht die Deichsellast.

Zum Verankern im Innern des Wohnwagens ist eine Verankerungsschiene 4 vorgesehen, die sich in Fahrzeuglängsrichtung am Boden befestigen läßt und die mit einem vorderen Anschlagwinkel 5 versehen ist, an dem das Vorderrad 6 des Motorrades ansteht, so daß es auch bei scharfem Bremsen nicht nach vorne geschleudert werden kann. Seitlich neben der am Boden zu befestigenden Verankerungsschiene sind im Boden Befestigungsösen 7 angeordnet, die der Verankerung von Spannseilen 8 dienen. Speziell für den Transport eines Motorrades ist neben der Verankerungsschiene auch eine Auffahrschiene 9 vorgesehen, die sich einfach an die Türschwelle anlegen läßt, um das Motorrad nach innen einzuschieben oder wieder herauszuschieben. Sowohl die zusammengeklappte Verankerungsschiene als auch die Auffahrschiene lassen sich, wie man aus Fig. 2 erkennen kann, sehr einfach und platzsparend in einem Befestigungswinkel 10 unter dem Fahrzeugboden 11 verstauen.

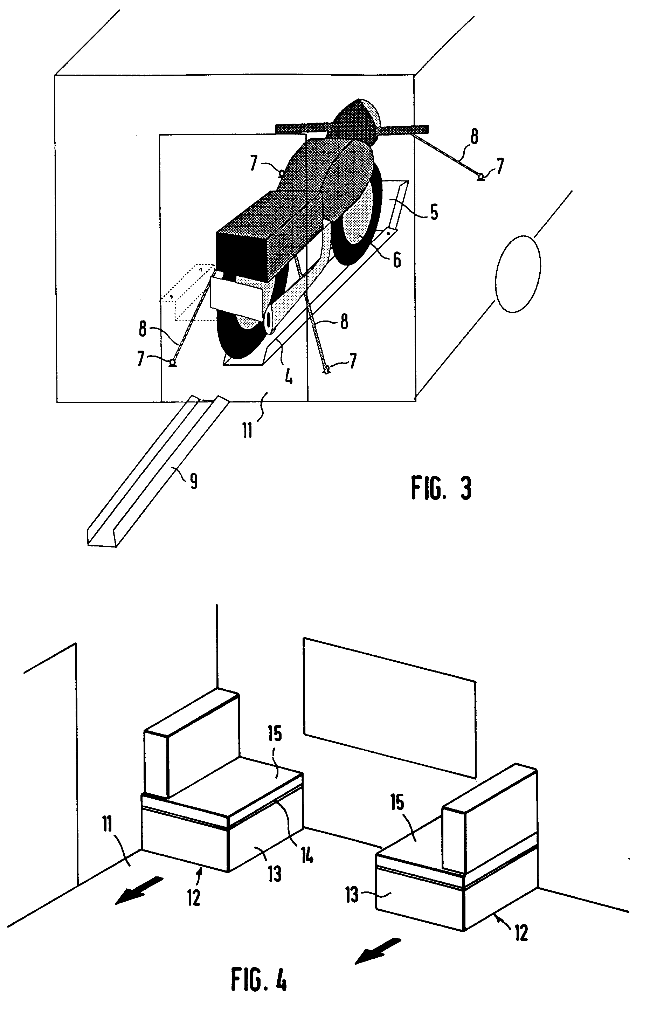

Um noch mehr Platz im Heckbereich des Wohnwagens schaffenzu können, was beispielsweise beim Transport von mehreren Fahrrädern anstelle eines Motorrads notwendig ist, sollen, wie es in Fig. 4 angedeutet ist, die im Heckbereich angeordneten Polstersitze 12 lösbar am Boden 11 befestigt sein und dabei herausnehmbare Container-Sitzkästen 13 aufweisen, die bevorzugt mit in Fig. 4 nicht mit eingezeichneten Tragegriffen versehen sind. Die Herausnehmbarkeit der Sitzkästen 13, die durch Kunststoffdeckel 14 abgedeckt sind, auf denen die lösbaren Polster 15 liegen, hat dabei nicht nur den bereits angesprochenen Vorteil, daß mehr Stauraum im Heck des Wohnwagens gebildet werden kann, wozu dann die Sitzkästen vorteilhafterweise unter das Bett im Bugbereich geschoben werden. Darüber hinaus hat die Ausbildung der erfindungsgemäßen Container-Sitzkästen auch den Vorteil, daß diese, die ja als Stauraum für eine Vielzahl von mitzuführenden Gegenständen von großer Bedeutung sind, nicht umständlich im Innern des Wohnwagens beladen werden müssen, sondern daß man sie herausnehmen und im Außenbereich, beispielsweise auch direkt in der Wohnung, beladen kann. Mit Hilfe ihrer Tragegriffe lassen sie sich dann auch beladen sehr einfach in den Wohnwagen zurückbringen, wobei auch hierfür die überbreite, zum Einschieben des Motorrads erforderliche Hecktür besondere Vorteile bietet.

## Patentansprüche

1. Wohnwagen, gekennzeichnet durch eine überbreite Hecktür (3) und wenigstens eine am Boden (11) in Fahrzeuglängsrichtung befestigbare, bei Nichtgebrauch unter dem Boden (11) in einer Einschubhalterung (10) verstaubare Verankerungsschiene (4, 5), sowie durch seitliche Befestigungsösen (7) im Boden für Spannseile (8) zum Transport von Zweirädern, insbesondere eines Motorrades.

2. Wohnwagen nach Anspruch 1, dadurch gekennzeichnet, daß die Verankerungsschiene (4) einen hochstehenden, zur Unterbringung in der Einschubhalterung einklappbaren Anschlagwinkel (5) für das Vorderrad (6) des Motorrades aufweist.

3. Wohnwagen nach Anspruch 1 oder 2, gekennzeichnet durch eine lösbar anlegbare Auffahrschiene (9).

4. Wohnwagen nach einem der Ansprüche 1 bis 3, dadurch gekennzeichnet, daß die Sitze (12) im Heckbereich herausnehmbare Container-Sitzkästen (13) aufweisen.

5. Wohnwagen nach Anspruch 4, dadurch gekennzeichnet, daß die Sitzkästen (13) mit Tragegriffen versehen sind.

6. Wohnwagen nach Anspruch 4 oder 5, dadurch gekennzeichnet, daß die Sitzkästen (13) unter das im Bug angeordnete Bett einschiebbar sind.

## Claims

1. Caravan characterised by an over-wide rear door (3) and at least one anchoring rail (4, 5) which is fixable to the floor (11) in the vehicle longitudinal direction and which is stowable in an insertion mount (10) under the floor (11) when not in use, and by lateral fixing eyes (7) in the floor for tensioning ropes (8) for transporting bicycles, in particular a motor cycle.

2. Caravan according to claim 1, characterised in that the anchoring rail (4) has an upwardly projecting impact bracket (5) for the front wheel (6) of the motor cycle, the bracket being foldable for housing in the insertion mount.

3. Caravan according to claim 1 or 2, characterised by a detachable and applicable drive rail (9).

4. Caravan according to one of claims 1 to 3, characterised in that the seats (12) in the rear region have removable container seat boxes (13).

5. Caravan according to claim 4, characterised in that the seat boxes (13) are provided with lifting handles.

6. Caravan according to claim 4 or 5, characterised in that the seat boxes (13) are insertable under the bed disposed in the front.

## Revendications

1. Caravane, caractérisée par une portière arrière (3) de largeur surdimensionnée, et au moins un rail d'ancrage (4, 5) pouvant être fixé sur le plancher (11) dans la direction longitudinale du véhicule et pouvant être rangé, en cas de non utilisation, sous le plancher (11), dans un support d'insertion (10), ainsi que par des anneaux de fixation latéraux (7) dans le plancher, pour des câbles tendeurs (8) en vue du transport de deux-roues, notamment d'une moto.

2. Caravane selon la revendication 1, caractérisée en ce que le rail d'ancrage (4) comporte une cornière de butée (5) destinée à la roue avant (6) de la moto, cette cornière de butée s'étendant vers le haut et pouvant être rabattue en vue d'être logée dans le support d'insertion.

3. Caravane selon la revendication 1 ou 2, caractérisée par un rail formant rampe d'accès (9), qui peut être mis en place de manière amovible.

4. Caravane selon l'une des revendications 1 à 3, caractérisée en ce que les sièges (12) dans la partie arrière, présentent des coffres de sièges formant conteneur (13), qui sont extractibles.

5. Caravane selon la revendication 4, caractérisée en ce que les coffres de sièges (13) sont dotés de poignées de portage.

6. Caravane selon la revendication 4 ou 5, caractérisée en ce que les coffres de sièges (13) peuvent être insérés sous le lit agencé dans la partie avant.
